# EUROPÄISCHE PATENTSCHRIFT

(11) **EP 2 644 460 B1**
(45) Veröffentlichungstag und Bekanntmachung des Hinweises auf die Patenterteilung: **25.02.2015**
(21) Anmeldenummer: 12008428.0
(22) Anmeldetag: 19.12.2012
(51) Int. Cl.: B60R 22/48

(54) **Kraftfahrzeug, umfassend mehrere aktive oder passive Sicherheitsvorrichtungen**
Motor vehicle, comprising a plurality of active or passive safety devices
Véhicule automobile contenant plusieurs dispositifs de sécurité actifs ou passifs

(30) Priorität: 28.03.2012 DE 102012006356
(43) Veröffentlichungstag der Anmeldung: 02.10.2013
(73) Patentinhaber: AUDI AG, 85045 Ingolstadt (DE)
(72) Erfinder: Larice, Markus, 85123 Karlskron (DE)
(74) Vertreter: Thielmann, Frank

(56) Entgegenhaltungen:
- EP-A1- 1 147 036
- DE-A1- 10 203 139
- JP-A- 2003 081 013
- US-A- 6 059 066
- US-A1- 2007 195 990
- US-A1- 2009 132 128
- US-A1- 2009 177 357
- US-A1- 2010 114 436

## Beschreibung

Die Erfindung betrifft ein Kraftfahrzeug, umfassend mehrere Sicherheitsvorrichtungen in Form von Sicherheitsgurten und Sensoriken, welche Sicherheitsvorrichtungen von einer im Kraftfahrzeug befindlichen Person aktiv zu aktivieren sind, wobei der Betätigungsvorgang akustisch und/oder optisch begleitet oder angezeigt wird.

Moderne Kraftfahrzeuge verfügen über unterschiedlichste Sicherheitsvorrichtungen, seien sie aktiver oder passiver Natur. Zu nennen sind beispielsweise Sicherheitsgurte, die den Insassen im Falle einer Kollision auf dem Sitz zurückhalten. Den Sicherheitsgurten können Gurtstraffer zugeordnet sein, die mit zugeordneter Sensorik im Falle eines Crashs den Sicherheitsgurt noch straffen, wozu beispielsweise pyrotechnische Mittel, die dann angesteuert werden, vorgesehen sind. Ferner sind Airbags zu nennen, die in beachtlicher Anzahl an unterschiedlichen Stellen im Kraftfahrzeug verbaut sind und sich im Crashfall entfalten, um zugeordnete Körperpartien eines Insassen zu schützen. Ferner sind Sicherheitsvorrichtungen in Form von Fahrerassistenzsystemen bekannt, die Sensorinformationen, die mittels unterschiedlichster Sensoren fahrzeugseitig respektive vom Fahrzeugumfeld erfasst werden, verarbeiten. Lediglich exemplarisch sind beispielsweise Kollisionswarnsysteme zu nennen, die unter Verwendung von Radarsensoren eine sich anbahnende Kollision erfassen und entsprechende Signale geben oder automatische Reaktion auslösen, wie auch Systeme, die den Fahrzeugrückraum überwachen und ein Signal geben, sollte das eigene Fahrzeug trotz herannahendem Rückverkehr die Spur wechseln etc. In all diese Systeme sind unterschiedlichste Sensoren eingebunden, beispielsweise auch Sitzbelegungssensoren, die erfassen, ob ein Sitz überhaupt belegt ist, so dass im Falle einer Belegung die entsprechenden dem Sitz zugeordneten Airbags auch aktiviert sind, oder ein System, das beispielsweise den Fahrer beobachtet, was üblicherweise mit einer Kamera geschieht, wobei die Bilder entsprechend ausgewertet werden, um eine etwaige Fahrerermüdung zu erfassen und in einem solchen Fall den Fahrer durch Signalgabe wieder aufmerksam zu machen etc.

Die verschiedenen Sicherheitsvorrichtungen können entweder vom Fahrer aktiv zuzuschalten sein, was in der Regel insbesondere für die Fahrerassistenzsysteme gilt. Denn nicht immer und nicht jeder Fahrer wünscht den ständigen Betrieb eines Fahrerassistenzsystems. Insbesondere die zentralen Sicherheitsvorrichtungen wie Sicherheitsgurt nebst Gurtstraffer und Airbags sind zumeist von Haus aus aktiv, d. h., sie aktivieren sich selbsttätig beim Starten des Fahrzeugs. Für den Fahrer jedoch ist eine entsprechende Aktivierung, insbesondere der sich selbsttätig aktivierenden Sicherheitsvorrichtungen wie Sicherheitsgurt und Airbag, nicht erkennbar. D. h., dass er darauf vertrauen muss, dass das jeweilige Sicherheitssystem sich auch tatsächlich selbsttätig aktiviert respektive in einem Zustand ist, der seine Funktion im Ernstfall sicherstellt.

Die Druckschrift US 2009/132128 A1 beschreibt ein System um die Belegung eines Sitzes und den Zustand eines Rückhaltesystems am Sitz zu überwachen. Das System umfasst Sitzbänke, die jeweils mehrere Sitzplätze umfassen. Jedem dieser Sitzplätze ist ein Sitzplatzbelegungssensor sowie ein Sicherheitsgurt mit einem Statussensor zugeordnet. Auf einer Anzeigevorrichtung werden die Zustände der Sitzplätze angezeigt, wobei die angezeigte Zustandsinformation Informationen über die Belegung des Sitzplatzes und den Zustand des Sicherheitsgurtes umfasst.

Die Druckschrift EP 1 147 036 A1 beschreibt ein System zum Schutz von Fahrzeuginsassen, das einen Missbrauch von Gurtsystemen erkennen kann.

Die Druckschrift DE 102 031 391 A1 beschreibt ein Verfahren zur Überwachung des verriegelten bzw. entriegelten Zustands von Sicherheitsgurten in den hinteren Sitzreihen eines Fahrzeugs. Dabei werden die Anzahl und/oder die Zustände der angelegten Sicherheitsgurte zu einer Basiszeit erfasst und der Autofahrer wird bezüglich einer späteren Änderung der Anzahl der verriegelten Sicherheitsgurte durch eine Anzeige alarmiert.

Die Druckschrift JP2003-081013 offenbart ein Kraftfahrzeug, umfassend mehrere Sicherheitsvorrichtungen, welche Sicherheitsvorrichtungen von einer im Kraftfahrzeug befindlichen Person aktiv zur Aktivierung zu betätigen sind, wobei der Betätigungsvorgang optisch begleitet oder angezeigt wird, wobei Mittel vorgesehen sind, mit denen während des Abrollvorgangs der Abrollvorgang des Sicherheitsgurts durch ein optisches Signal und das erfolgreiche Einstecken durch weiteres optisches Signal angezeigt wird.

Der Erfindung liegt damit das Problem zugrunde, ein Kraftfahrzeug anzugeben, das für den Fahrer das Erkennen eines aktiven Systemzustands ermöglicht.

Zur Lösung dieses Problems ist ein Kraftfahrzeug gemäß Anspruch 1 vorgesehen.

Beim erfindungsgemäßen Kraftfahrzeug wird mit besonderem Vorteil der Aktivierungszustand des Sicherheitsgurtes, der in das Informationssystem eingebunden ist, akustisch und/oder optisch angezeigt, bzw. wird der Betätigungsvorgang, der zum Aktivieren vorzunehmen ist, akustisch und/oder optisch begleitet, um in jedem Fall dem Fahrer eine entsprechende Information zu geben, dass eine Aktivierung vorgenommen wird, respektive erfolgt ist.

Dies kann beispielsweise bevorzugt dadurch erfolgen, dass während des Ausziehen eines Sicherheitsgurts aus seiner Aufbewahrungsstellung in die Schließstellung ein akustisches Begleitsignal und mit erfolgreichem Einstecken einer Gurtschlosszunge in ein Gurtschloss ein dazu akustisch unterschiedliches Signal gegeben wird. D. h., dass durch diese akustische Begleitung während des "Aktivierens" der Sicherheitsvorrichtung "Gurt" eine akustische Begleitung erfolgt, die dem Fahrer oder Beifahrer etc. signalisiert, dass er momentan aktiv dabei ist, diese wichtige Sicherheitsvorrichtung in Betrieb zu nehmen, wie auch der Abschluss des Aktivierungsvorgangs und damit die Aktivierung dieser Sicherheitsvorrichtung akustisch unterschiedlich angezeigt wird. Dies nämlich dann, wenn die Gurtschlosszunge in das Gurtschloss einrastet, nachdem dann ein akustisch anderes Signal gegeben wird. Beispielsweise kann durch Gabe dieser Signale über ein fahrzeugseitig verbautes Audiosystem beim Abrollen des Sicherheitsgurts ein tonal höheres Geräusch gegeben werden, während mit Einrasten der Gurtschlosszunge in das Gurtschloss ein dumpfer, satter Klang gegeben wird, so als wenn beispielsweise eine Sicherheitstür oder dergleichen sich schließt. Hierüber kann dem Fahrer auf angenehme Weise die Aktivierung dieser Sicherheitsvorrichtung mitgeteilt werden.

Alternativ kann dies natürlich auch optisch erfolgen, beispielsweise durch eine entsprechende Darstellung an einem zentralen, großflächigen Display oder dergleichen. Hierbei kann der Abrollvorgang beispielsweise durch Darstellung einer Bildanzeige in einer ersten Farbe visualisiert werden, während der erfolgte Einrastvorgang durch Gabe einer zweiten Bilddarstellung visualisiert wird.

Gemäß einer Alternative, die nicht zur Erfindung gehört, kann auch der Aktivierungszustand anderer Sicherheitsvorrichtungen wie insbesondere der Airbags, auf deren Inbetriebnahme der Fahrer letztlich keinen Einfluss hat, visualisiert werden. Dies kann beispielsweise dadurch geschehen, dass, nachdem die einzelnen Systeme sich zugeschaltet haben und in der Regel eine Steuerungsvorrichtung deren Funktionalität respektive Funktionszustand überprüft und für in Ordnung befunden hat, ein entsprechendes akustisches und/oder optisches Signal gegeben wird, das auch den Abschluss der Aktivierung dieser Systeme anzeigt. In Verbindung hiermit kann auch die automatische Aktivierung anderer Sicherheitssysteme respektive diesen zugeordneter Sensoren stehen, wie beispielsweise die Aktivierung von Radarsensoren, die entsprechenden Fahrerassistenzsystemen zugeordnet sind, selbst wenn diese Fahrerassistenzsysteme vom Fahrer aktiv nicht zugeschaltet werden. Denn grundsätzlich erhält der Fahrer auch dann eine entsprechende Funktionalitätsinformation hinsichtlich der Sensoren. Daneben können Sensoriken, die der Innenraumüberwachung dienen, beispielsweise der Sitzbelegung, der Sitzposition oder der Erkennung einer Fahrermüdigkeit etc. als "aktiviert" über dieses akustische/optische Informationssystem angezeigt werden. Der Fahrer erhält also durch Gabe eines oder mehrerer solcher akustischer und/oder optischer Signale entsprechende Informationen hinsichtlich des Aktivierungszustands und damit der Betriebsbereitschaft wichtiger Sicherheitssysteme, so dass er gestützt auf diese wichtige Kenntnis die Fahrt beginnen kann. Denn diese Überprüfung der Aktivierung respektive die Vornahme der Aktivierung erfolgt in der Regel vor Beginn der eigentlichen Fahrt, eben wenn das Fahrzeug angelassen wird respektive die Insassen die Sitzgurte anlegen, so dass eine entsprechende Information grundsätzlich vor Beginn der Fahrt vorliegt und gegeben wird.

Wie bereits beschrieben wird das akustische Signal bevorzugt über ein fahrzeugseitig verbautes Audiosystem gegeben, das es ermöglicht, unterschiedlichste Tonlagen in entsprechender, angenehmer Klangqualität wiederzugeben und insbesondere Signale zu variieren, wenn unterschiedliche Zustände angezeigt werden sollen, wie z. B. das Abrollen des Gurtbands und das endgültige Einrasten oder dergleichen.

Das Erreichen eines selbsttätig aktivierten Zustands kann auch an einem Display, insbesondere über ein Symbol angezeigt werden. Dort ist es beispielsweise möglich, ein entsprechendes Symbol für die Aktivierung der Airbags sowie der zugeordneten Sensorik zu geben, wie hierüber auch beispielsweise ein separates Symbol gegeben werden kann, das die Aktivierung der Fahrzeugumfeldsensorik (Radarsensoren, Ultraschallsensoren, Videokamera etc.) anzeigt.

Grundsätzlich besteht die Möglichkeit, insbesondere im Falle einer optischen Visualisierung den Aktivierungszustand unterschiedlicher Sensoriken anzuzeigen, mithin also ein gemeinsames Symbol wiederzugeben, das beispielsweise die Aktivierung der Airbags wie auch der gesamten Umfeld- respektive Innenraumsensorik anzeigt, so dass der Fahrer mit nur einem Symbol mitgeteilt bekommt, dass die gesamte Fahrzeugsicherheit aktiviert ist. Denkbar ist aber wie gesagt auch die Gabe unterschiedlicher Symbole, um den Informationsgehalt zu diversifizieren. Ist ein Sensor nicht aktivierbar, weil er z. B. defekt ist, wird ein Fehlersymbol angezeigt, gegebenenfalls mit Hinweis auf den defekten Sensor.

Um dem Fahrer auch während der Fahrt stets eine Informationsmöglichkeit hinsichtlich des Aktivierungsbetriebs der Sicherheitssensorik respektive der Sicherheitsvorrichtungen zu geben, kann gemäß einer vorteilhaften Weiterbildung der Erfindung die Displayanzeige, gegebenenfalls in abgewandelter, insbesondere in verkleinerter Form, auch während des Betriebs des Fahrzeugs dargestellt werden. Wird im einfachsten Fall ein grünes +-Symbol als optische Aktivierungsinformation gegeben, wenn die Sicherheitssysteme aktiviert und funktionsmäßig in Ordnung sind, so kann dieses Sicherheitssystem beispielsweise zu Beginn der Fahrt einmal großformatig im Display angezeigt werden, und anschließend kontinuierlich bei selbstverständlich entsprechender Aktivierungszustandsüberwachung beispielsweise randseitig am Display in deutlich verkleinerter Form angezeigt werden. In jedem Fall erhält der Fachmann kontinuierlich eine Information über die Systemaktivierung.

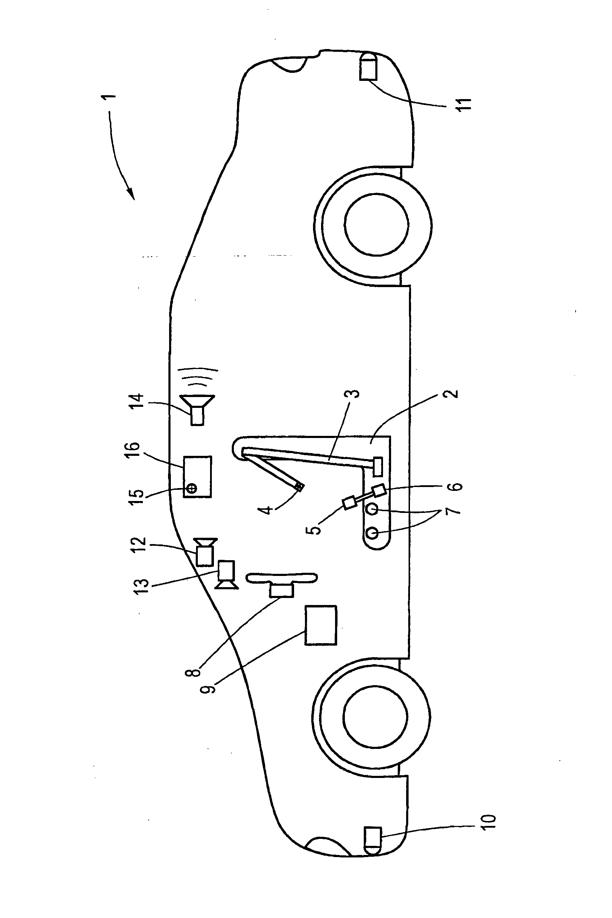

Weitere Vorteile, Merkmale und Einzelheiten der Erfindung ergeben sich aus dem im Folgenden beschriebenen Ausführungsbeispiel sowie anhand der Zeichnung.

In der Figur ist ein erfindungsgemäßes Kraftfahrzeug 1 gezeigt, in dem diverse aktive und passive Sicherheitsvorrichtungen verbaut sind.

Gezeigt ist ein Fahrersitz 2, dem ein Sicherheitsgurt 3 mit Gurtschlosszunge 4 und Gurtschloss 5, das über einen Gurtstraffer 6 als weitere Sicherheitsvorrichtung verfügt, zugeordnet ist. Im Sitz sind diverse Sensoren 7 zur Erfassung einer Sitzbelegung vorgesehen, d. h., dass erfasst werden kann, ob eine Person auf dem Sitz sitzt. Diese Information kann unter Umständen erforderlich sein, um einen zugeordneten Airbag 8 zu aktivieren und im Bedarfsfall auszulösen.

Vorgesehen ist ferner exemplarisch ein Fahrerassistenzsystem 9, dem exemplarisch Umfeldsensoren 10, 11, z. B. Radar- und Ultraschallsensoren, zugeordnet sind, und das beispielsweise als Kollisionsüberwachungssystem oder als Spurwechselsystem etc. ausgelegt ist. Selbstverständlich können fahrzeugseitig auch diverse andere Fahrerassistenzsysteme zusätzlich verbaut sein.

Weiterhin ist eine Innenraumkamera 12 vorgesehen, die der Erfassung des Fahrers dient, um eine etwaige Ermüdung des Fahrers zu erkennen und ihn zu stimulieren. Schließlich ist auch eine Fahrzeugvorfeldkamera 13 vorgesehen, die das Fahrzeugvorfeld aufnimmt und Umfeldinformationen liefert, die wiederum zum Betrieb eines oder mehrerer Fahrerassistenzsysteme erforderlich sind.

Das erfindungsgemäße Kraftfahrzeug bietet die Möglichkeit, Informationen in akustischer und/oder optischer Natur zu geben, wenn eine Sicherheitsvorrichtung zur Aktivierung betätigt wird respektive aktiviert ist oder sich selbst reaktiviert.

So wird erfindungsgemäß eine entsprechende Erfassung des Abrollvorgangs des Sicherheitsgurts 3 von der Gurtrolle vorgenommen, wozu über eine entsprechende Sensorik dieser Abrollvorgang ermittelt wird. Während dieses Abrollvorgangs kann beispielsweise über ein Lautsprechersystem 14 ein entsprechendes Signal gegeben werden, das den Fahrer diesen Aktivierungsvorgang akustisch begleitet. Wird die Gurtschlosszunge 4 in das Gurtschloss 5 gesteckt, also der Sicherheitsgurt geschlossen, so kann über das Lautsprechersystem 14 ein akustisch anderes Signal gegeben werden, das die Vollendung dieses Aktivierungsvorgangs anzeigt.

Die sich selbststätig einstellende Aktivierung beispielsweise des Airbags 8 (von dem natürlich eine Vielzahl an unterschiedlichen Stellen im Kraftfahrzeug verbaut sind) wird über eine entsprechende Steuervorrichtung ebenfalls erfasst. Sind der oder sämtliche Airbags 8 aktiviert, so kann dies beispielsweise über ein Symbol 15 an einem Display 16 dem Fahrer zumindest unmittelbar nach der Aktivierung visualisiert werden, wie auch kontinuierlich während des nachfolgenden Fahrbetriebs, dann gegebenenfalls in verkleinerter Form.

Über dieses Symbol 15 kann aber auch die sich zeitgleich einstellende Aktivierung eines sich selbsttätig zuschaltenden Fahrerassistenzsystems 9 respektive die selbsttätigen Aktivierung der Sensoren 10, 11 (die sich auch aktivieren, wenn das eigentliche Fahrerassistenzsystem 9 nicht aktiv zugeschaltet wird) angezeigt werden. D. h., dass das Symbol 15 als quasi übergeordnetes Aktivierungssymbol für unterschiedliche Sensoriken respektive Sicherheitsvorrichtungen angezeigt wird.

D. h., dass, wenn die Insassen im Fahrzeug Platz nehmen, beispielsweise zunächst die Sicherheitsgurte angelegt werden, was in der beschriebenen Form akustisch begleitet werden kann. Wird anschließend die Zündung betätigt, so aktivieren sich die anderen Sensoriken respektive Sicherheitsvorrichtungen (Airbags 8, gegebenenfalls Fahrerassistenzsystem 9, Sensoren 10, 11, Kameras 12, 13). Der jeweilige Aktivierungszustand und Funktionszustand wird selbstverständlich über entsprechende Steuergeräte etc. erfasst. Sobald das jeweilige System respektive die jeweilige Sicherheitsvorrichtung aktiviert und betriebsbereit ist, kann an einem zentralen Steuergerät die entsprechende Information diesbezüglich abgegriffen werden, woraufhin es zur Gabe des Symbols 15 kommt. Selbstverständlich können die einzelnen Sicherheitsvorrichtungen separate Symbole besitzen, die dann natürlich separat angezeigt werden können.

## Patentansprüche

1. Kraftfahrzeug, umfassend mehrere Sicherheitsvorrichtungen, welche Sicherheitsvorrichtungen von einer im Kraftfahrzeug (1) befindlichen Person aktiv zur Aktivierung zu betätigen sind, wobei der Betätigungsvorgang akustisch und/oder optisch begleitet oder angezeigt wird, wobei Mittel vorgesehen sind, mit denen während eines durch eine Sensorik erfassten Abrollvorgangs eines Sicherheitsgurts (3) aus einer Aufbewahrungsstellung in eine Schließstellung der Abrollvorgang durch ein akustisches Begleitsignal und ein erfolgreiches Einstecken einer Gurtschlosszunge (4) in ein Gurtschloss (5) mit einem dazu akustisch unterschiedlichen Signal signalisiert wird, und/oder wobei Mittel vorgesehen sind, mit denen während des Abrollvorgangs der Abrollvorgang des Sicherheitsgurts (3) durch eine erste Bildanzeige und das erfolgreiche Einstecken durch eine zweite Bildanzeige an einem Display (16) optisch visualisiert wird.

2. Kraftfahrzeug nach Anspruch 1,
**dadurch gekennzeichnet,**
**dass** das akustische Signal über ein fahrzeugseitig verbautes Audiosystem (14) gegeben wird.

## Claims

1. Motor vehicle comprising a plurality of safety devices, which safety devices are to be actively operated, for the purpose of activation, by a person inside the motor vehicle (1), the operation process being accompanied or indicated by acoustic and/or visual means, wherein means are provided which, during an unrolling process, detected by a sensor system, of a seat belt (3) from a stored position into a closed position, signal the unrolling process by means of an acoustic accompanying signal and signal successful insertion of a seat belt buckle tongue (4) into a seat belt buckle (5) by a signal that is acoustically different therefrom, and/or wherein means are provided which, during the unrolling process, indicate, visually on a display (16), the unrolling process of the seat belt (3) by means of a first image display and indicate the successful insertion by means of a second image display.

2. Motor vehicle according to claim 1, **characterised in that** the acoustic signal is given by means of an audio system (14) installed in the vehicle.

## Revendications

1. Véhicule automobile comprenant plusieurs dispositifs de sécurité, lesquels dispositifs de sécurité sont censés être commandés pour activation par une personne se trouvant dans le véhicule automobile (1), dans lequel l'étape de commande est accompagnée par voie acoustique et/ou optique ou affichée, dans lequel il est prévu des moyens avec lesquels, au cours d'une opération de déroulement d'une ceinture de sécurité (3) d'une position de repli à une position d'arrêt - détectée par un système sensoriel - l'opération de déroulement est signalisée par un signal d'accompagnement acoustique et un enfichage efficace de la patte (4) dans une boucle de ceinture (5) est signalisé avec un signal différent au niveau acoustique du premier, et/ou dans lequel il est prévu des moyens avec lesquels, au cours de l'opération de déroulement, l'opération de déroulement de la ceinture de sécurité (3) est visualisée au plan optique par une première représentation et l'enfichage efficace par une deuxième représentation sur un affichage (16).

2. Véhicule automobile selon la revendication 1, **caractérisé en ce que** :
le signal acoustique est délivré via un système audio (14) incorporé côté véhicule.
